# EUROPÄISCHE PATENTSCHRIFT

(11) **EP 1 397 600 B1**
(45) Veröffentlichungstag und Bekanntmachung des Hinweises auf die Patenterteilung: **28.06.2006**
(21) Anmeldenummer: 02750887.8
(22) Anmeldetag: 04.05.2002
(51) Int. Cl.: F16B 13/12, F16B 13/14, F16B 13/08

(54) **SPREIZDÜBEL**
EXPANSION DOWEL
CHEVILLE A EXPANSION

(30) Priorität: 20.06.2001 DE 10129733
(43) Veröffentlichungstag der Anmeldung: 17.03.2004
(73) Patentinhaber: fischerwerke Artur Fischer GmbH & Co. KG, 72178 Waldachtal (DE)
(72) Erfinder: DALY, Aaron, 72178 Waldachtal (DE)
(86) Internationale Anmeldenummer: PCT/EP2002/004912
(87) Internationale Veröffentlichungsnummer: WO 2003/001071

(56) Entgegenhaltungen:
- DE-A- 3 017 108
- DE-A- 3 042 463
- DE-A- 3 241 158
- US-A- 5 431 516
- DATABASE WPI Section PQ, Week 200150 Derwent Publications Ltd., London, GB; Class Q61, AN 2001-462126 XP002902682 & JP 2001 165130 A (POP RIVET FASTENER KK) , 19. Juni 2001 (2001-06-19)

## Beschreibung

Die Erfindung betrifft einen Spreizdübel mit den Merkmalen des Oberbegriffs des Anspruchs 1.

Aus der DE 40 26 944 A1 ist ein gattungsgemäßer Spreizdübel bekannt, dessen Spreizbereich durch hintereinander angeordnete und radial nach einer Seite hin verdrängbare Spreizelemente gebildet wird. Die Spreizelemente weisen exzentrisch und zu den jeweils benachbarten Elementen versetzt angeordnete Durchbrechungen auf, die einen verengten Spreizkanal bilden. Beim Eintreiben einer Befestigungsschraube in den Spreizkanal werden die als Durchgangslöcher ausgebildeten und exzentrisch zueinander angeordneten Durchbrechungen der scheibenförmigen Spreizelemente koaxial zueinander und zum Spreizdübel ausgerichtet. Die Spreizelemente verschieben sich dadurch in radialer Richtung des Spreizdübels, wodurch der Spreizdübel aufgespreizt und in einem Bohrloch verankert wird.

Um den bekannten Spreizdübel mit den exzentrisch zueinander versetzt angeordneten Durchgangslöchern in seinen scheibenförmigen Spreizelementen durch Spritzgießen aus Kunststoff herstellen zu können, sind die Spreizelemente an zwei kammartig ausgebildeten Befestigungsstegen angeordnet, die über ein Filmschamier am vorderen Dübelende gelenkig miteinander verbunden sind. Die beiden Befestigungsstege mit den Spreizelementen werden in einer aufgeklappten Stellung, in der die Befestigungsstege in Verlängerung miteinander angeordnet sind, gespritzt und nach der Entnahme aus einem Sprüzgießwerkzeug zusammengeklappt, so dass die Spreizelemente der beiden Befestigungsstege kammartig ineinandergreifend zu liegen kommen.

Ein solcher Spreizdübel mit einem durch hintereinander angeordnete Spreizelemente gebildeten Spreizbereich weist eine gleichmäßige und Spannungsspitzen vermeidende Spreizdruckverteilung auf, die bei geringem Eintreibwiderstand der Befestigungsschraube hohe Auszugswerte insbesondere auch in porösem und brüchigem Mauerwerk ermöglicht.

Um einen derartigen Spreizdübel zu schaffen, der spritztechnisch einstückig und gebrauchsfertig herstellbar ist, schlägt die Druckschrift DE 32 41 158 A1 vor, die Spreizelemente jeweils U-förmig auszubilden, so dass die Durchbrechungen eine offene Seite aufweisen, die sich abwechselnd jeweils gegenüberliegen. Damit bildet die Wandung zweier nacheinander angeordneter U-förmiger Spreizelemente einen geschlossenen Spreizkanalabschnitt, der durch die Anzahl der hintereinander angeordneten Spreizelemente beliebig verlängerbar ist. Der durch die Spreizelemente gebildete Spreizbereich wird durch kammartig ineinandergreifende Gießkeme der beiden Werkzeughälften des Spritzgießwerkzeuges hergestellt, wobei sich die Zinken der Kerne nur soweit überlappen, dass ein gegenüber dem Außendurchmesser der Befestigungsschraube verengter Spreizkanal entsteht. Durch Eindrehen einer Befestigungsschraube oder Einschlagen einer Nagelschraube in den verengten Spreizkanal werden die Spreizelemente jeweils abwechselnd beidseitig radial gegen die Bohrlochwandung gepresst und damit der Spreizdübel in einem Bohrloch verspreizt.

Der Erfindung liegt die Aufgabe zugrunde, einen Spreizdübel der vorstehend genannten Art so auszubilden, dass sich eine Nagelschraube leichter in den Spreizdübel eintreiben lässt.

Diese Aufgabe wird erfindungsgemäß durch die Merkmale des Anspruchs 1 gelöst. Eine Verringerung des Eintreibwiderstandes insbesondere beim Einschlagen einer Nagelschraube in den Spreizdübel wird dadurch erreicht, dass die innere Wandung der Spreizelemente sich in Richtung Einsteckende des Spreizdübels verengt.

Dadurch entsteht eine trichterförmige Verengung des Spreizkanals an jedem Spreizelement, die einerseits die Führung der mit einer Spitze versehenen Nagelschraube im Spreizkanal begünstigt und andererseits die radiale Aufweitung der Spreizelemente erleichtert.

Zur Reduzierung der Flächenpressung an der engsten Stelle eines Spreizelements kann in einer weiteren Ausgestaltung der Erfindung die äußere Wandung eines Spreizelements eine in Richtung Einsteckende des Spreizdübels geneigte Abschrägung aufweisen. Damit wird auch ein Verhaken beim Einführen des Spreizdübels in ein Bohrloch vermieden.

Insbesondere bei der Verwendung des erfindungsgemäßen Spreizdübeis in Verbindung mit einer Nagelschraube ist es zweckmäßig, die Innenbohrung des Dübelschaftes am Übergang zum Spreizbereich mit einer Verengung zur Bildung einer Einschlagsperre für die Nageischraube zu versehen. Die Einschlagsperre bietet die Möglichkeit, den Spreizdübel mit der in den Dübelschaft eingesetzten Nagelschraube durch den zu befestigenden Gegenstand hindurch in das im Mauerwerk vorbereitete Bohrloch einzutreiben, bis der am Dübelschaft üblicherweise angeordnete Rand auf dem zu befestigenden Gegenstand aufsitzt. Nach dem Aufsitzen wird durch Hammerschläge auf die Nagelschraube die Einschlagsperre überwunden und die Nagelschraube in den Dübel zu dessen Aufspreizung und Verspannen des Gegenstandes am Mauerwerk eingetrieben.

Zum Ausgleich der Durchmessertoleranzen von Nagelschrauben ist es zweckmäßig, die Einschlagsperre flexibel zu gestalten, um eine Überdehnung oder gar Abreißen des Schaftes zu vermeiden. Dies kann dadurch erreicht werden, dass im Bereich der Verengung zwei sich gegenüberliegende Schlitze angeordnet sind.

In der Zeichnung ist ein Ausführungsbeispiel der Erfindung dargestellt. Es zeigen:
- Figur 1: den erfindungsgemäßen Spreizdübel in einer perspektivischen Ansicht;
- Figur 2: den Spreizdübel gemäß Figur 1 im Achsschnitt mit eingesetzter Nagelschraube; und
- Figur 3: einen Querschnitt entlang der Linie A-A in Figur 2 in vergrößerter Darstellung.

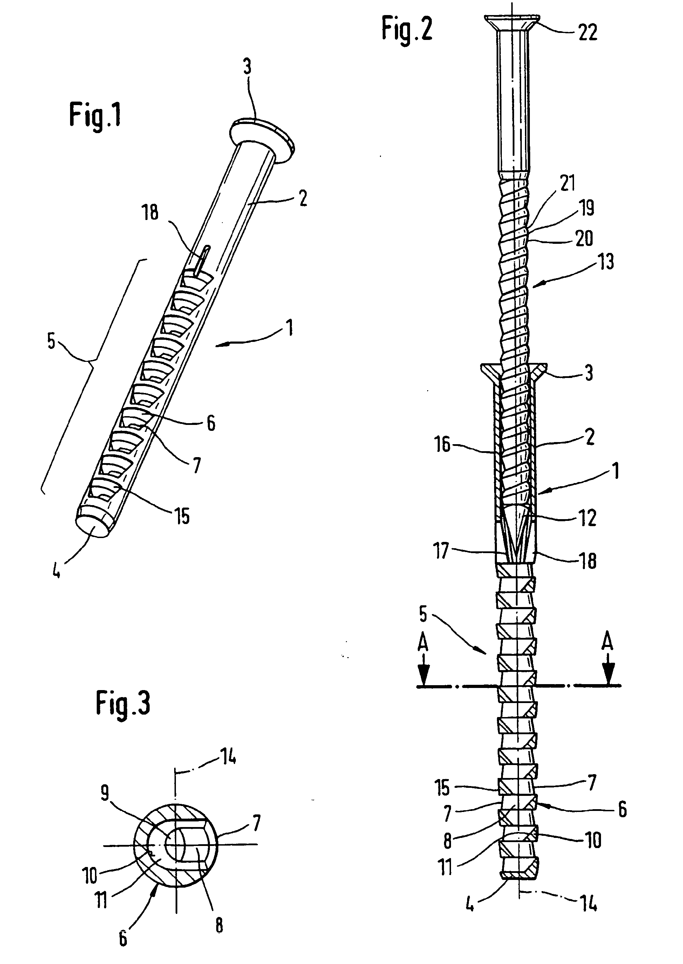

Der in Figur 1 dargestellte erfindungsgemäße Spreizdübel 1 ist ein einstückig aus Kunststoff hergestelltes Spritzgießteil. Er weist einen hohlzylindrischen Dübelschaft 2 auf, der an seinem rückwärtigen Ende einstückig mit einem seitlich überstehenden Einschlagbund 3 versehen ist. In Richtung zum Einsteckende 4 des Spreizdübels 1 schließt sich an den Dübelschaft 2 ein Spreizbereich 5 an, der durch mehrere hintereinander angeordnete Spreizelemente 6 gebildet ist.

In Figur 2 und 3 ist erkennbar, dass die Spreizelemente 6 U-förmig ausgebildet sind, wobei die offene Seite 7 der Durchbrechungen 8 abwechselnd sich jeweils gegenüberliegen. Die Durchbrechungen 8 der Spreizsegmente 6 bilden damit einen durchgehenden Spreizkanal 9, wobei die Wandung 10 der Spreizsegmente 6 den Spreizkanal 9 begrenzen. Die innere Wandung 11 der Spreizelemente 6 verengt sich in Richtung des Einsteckendes 4 des Spreizdübels 1, so dass für die Spitze 12 der in Figur 2 dargestellten Nagelschraube 13 eine trichterförmige Einlaufschräge entsteht. Der Mittelpunkt an der engsten Stelle der Durchbrechung 8 ist gegenüber der Mittelachse 14 des Spreizdübels 1 in Richtung der offenen Seite 7 der Durchbrechung 8 versetzt, so dass eine ellipsenförmige Verengung des Spreizkanals 9 entsteht. Dadurch werden die Spreizelemente 6 beim Eintreiben der Nagelschraube 13 in den Spreizkanal 9 abwechselnd und in entgegengesetzter Richtung radial nach außen gedrückt und damit der Spreizdübel 1 im Bohrloch eines Mauerwerks verspreizt (nicht dargestellt). Um eine zu starke Flächenpressung an der engsten Stelle der Spreizelemente 6 zu vermeiden, ist die äußere Wandung der Spreizelemente mit einer in Richtung Einsteckende 4 des Spreizdübels 1 geneigten Abschrägung 15 versehen.

Als Einschlagsperre für die Nagelschraube 13 weist die Innenbohrung 16 des Dübelschaftes 2 am Übergang zum Spreizbereich 5 eine Verengung 17 auf. Im Bereich der Verengung 17 sind zwei sich gegenüberliegende Schlitze 18 angeordnet, so dass die durch die Verengung gebildete Einschlagsperre auch bei durchmessergrößeren Nagelschrauben 13 noch überwindbar ist. Das Gewinde 19 der Nagelschraube 13 hat eine etwas längere und flachere Gewindeflanke 20 in Richtung zur Spitze 12 und eine etwas kürzere und steilere Gewindeflanke 21 in Richtung zum Kopf 22 der Nagelschraube 13. Der Winkel der Gewindeflanke 20 zur Mittelachse beträgt vorzugsweise zwischen 12 und 15 Grad und der Winkel der Gewindeflanke 21 zwischen 20 und 25 Grad.

## Patentansprüche

1. Spreizdübel mit am Dübelschaft (2) hintereinander angeordneten und radial nach einer Seite hin verdrängbaren und einen Spreizbereich (5) bildenden Spreizelementen (6), die eine zu den jeweils benachbarten Spreizelementen versetzt angeordnete Durchbrechung (8) aufweisen, die einen verengten Spreizkanal (9) zur Aufnahme einer Befestigungsschraube vorzugsweise einer Nageischraube bilden, wobei die Spreizelemente (6) U-förmig ausgebildet sind, wobei die offene Seite (7) der Durchbrechungen (8) der Spreizelemente (6) abwechselnd sich jeweils gegenüberliegen, **dadurch gekennzeichnet, dass** die innere Wandung (11) eines Spreizelements (6) sich in Richtung Einsteckende (4) des Spreizdübels (1) verengt.

2. Spreizdübel nach Anspruch 1, **dadurch gekennzeichnet, dass** die äußere Wandung eines Spreizelements (6) eine in Richtung Einsteckende (4) des Spreizdübels (1) geneigte Abschrägung (15) aufweist.

3. Spreizdübel nach Anspruch 1, **dadurch gekennzeichnet, dass** die Innenbohrung (16) des Dübelschaftes (2) am Übergang zum Spreizbereich (5) eine Verengung (17) zur Bildung einer Einschlagsperre für eine Nagelschraube aufweist.

4. Spreizdübel nach Anspruch 3, **dadurch gekennzeichnet, dass** im Bereich der Verengung (17) zwei sich gegenüberliegende Schlitze (18) angeordnet sind.

## Claims

1. Expansible plug having expansible elements (6) arranged one behind the other on the plug shank (2) to be displaceable radially to one side and forming an expansible region (5), which expansible elements (6) have an opening (8) arranged offset relative to the respective adjacent expansible elements, which openings (8) form a narrowed expansible channel (9) to receive a fastening screw, preferably a screw nail, the expansible elements (6) being U-shaped and the open sides (7) of the openings (8) of the expansible elements (6) lying opposite one another in alternation, **characterized in that** the inner wall (11) of an expansible element (6) narrows in the direction of the insertion end (4) of the expansible plug (1).

2. Expansible plug according to claim 1, **characterized in that** the outer wall of an expansible element (6) has an inclined surface (15) sloping in the direction of the insertion end (4) of the expansible plug (1).

3. Expansible plug according to claim 1, **characterized in that** the inner bore (16) of the plug shank (2) has a narrowed portion (17) at the transition to the expansible region (5) to form an obstruction to the hammering in of a screw nail.

4. Expansible plug according to claim 3, **characterized in that** two slits (18) are arranged opposite one another in the region of the narrowed portion (17).

## Revendications

1. Cheville expansible comprenant une tige de cheville (2) dotée d'éléments expansibles (6) disposés les uns derrière les autres et pouvant être déplacés en direction d'un côté et formant une zone expansible (5), qui comprennent une perforation (8) disposée de façon décalée par rapport aux éléments expansibles respectivement voisins, qui forment un canal expansible (9) rétréci destiné à recevoir une vis de fixation, de préférence une fausse vis, les éléments expansibles (6) étant conçus en forme de U, les côtés ouverts (7) des perforations (8) des éléments expansibles (6) étant opposés respectivement de manière alternée, **caractérisée en ce que** la paroi intérieure (11) d'un élément expansible (6) se rétrécit en direction de l'extrémité d'introduction (4) de la cheville expansible (1).

2. Cheville expansible selon la revendication 1, **caractérisée en ce que** la paroi extérieure d'un élément expansible (6) comprend un chanfrein (15) incliné en direction de l'extrémité d'introduction (4) de la cheville expansible (1).

3. Cheville expansible selon la revendication 1, **caractérisée en ce que** la forure interne (16) de la tige de cheville (2) au niveau du passage à la zone expansible (5) comprend un rétrécissement (17) destiné à former un blocage d'enfoncement pour une fausse vis.

4. Cheville expansible selon la revendication 3, **caractérisée en ce que** deux fentes opposées (18) sont disposées dans la zone du rétrécissement (17).
